# EUROPEAN PATENT SPECIFICATION

(11) **EP 3 073 755 B1**
(45) Date of publication and mention of the grant of the patent: **22.04.2020**
(21) Application number: 15290085.8
(22) Date of filing: 26.03.2015
(51) Int. Cl.: H04J 14/02, H04Q 11/00

(54) **OPTICAL PACKET DROP STRUCTURE AND ASSOCIATED NODE**
OPTISCHE PAKETTROPFENSTRUKTUR UND ZUGEHÖRIGER KNOTEN
STRUCTURE DE PERTE DE PAQUET OPTIQUE ET NOEUD ASSOCIÉ

(43) Date of publication of application: 28.09.2016
(73) Proprietor: Alcatel Lucent, 91620 Nozay (FR)
(72) Inventor: Mestre Adrover, Miquel Angel, 91620 Nozay (FR); Pointurier, Yvan, 91620 Nozay (FR)
(74) Representative: Novagraaf Technologies

(56) References cited:
- EP-A1- 2 838 217
- WO-A2-01/19030
- US-A1- 2004 175 175
- CHIARONI D ET AL: "Successful demonstration of the compatibility of optical packet and wavelength Circuit switching in optical networks", 35TH EUROPEAN CONFERENCE ON OPTICAL COMMUNICATION, 2009. ECOC '09, VIENNA, AUSTRIA, IEEE, PISCATAWAY, NJ, USA, 20 September 2009 (2009-09-20), pages 1-2, XP031546500, ISBN: 978-1-4244-5096-1
- CHIARONI D ET AL: "Packet OADMs for the next generation of ring networks", BELL LABS TECHNICAL JOURNAL, WILEY, CA, US, vol. 14, no. 4, 4 January 2010 (2010-01-04), pages 265-283, XP001552054, ISSN: 1089-7089, DOI: 10.1002/BLTJ.20415 [retrieved on 2010-02-23]

## Description

### BACKGROUND OF THE INVENTION

The present invention relates to the field of wavelength division multiplexing (WDM) optical network with packet granularity capability and more particularly to the dropping means of the optical packet switching node enabling to switch the packets to be dropped toward a receiver to be detected.

Indeed, in network with packet granularity capability, optical packets are transmitted within time slots and, in each node called optical packet switching node, optical packets may be dropped and added to the optical links of the network. To achieve such dropping, it is known to use a demultiplexer to separate the different wavelength channels comprising the packets.

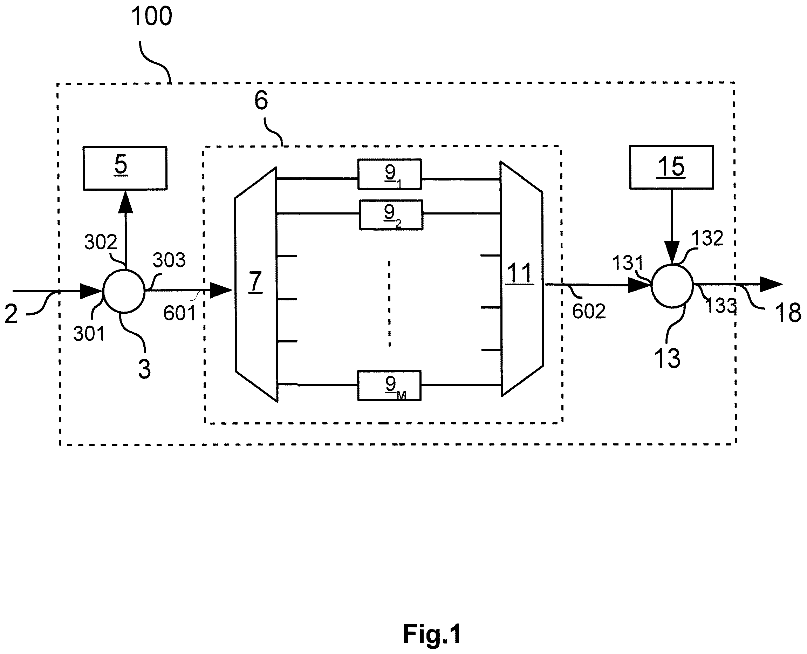

Fig.1 represents an optical packet switching node 100 according to an embodiment of the state of the art. It comprises a dropping optical coupler or optical splitter 3 comprising an input 301 linked to the input 2 of the node 100, a first output 302 linked to a receiving unit 5 which is configured for detecting the dropped packets and a second output 303 linked to the input 601 of a switching structure 6. The dropping optical coupler 3 is configured for transmitting a wavelength division multiplexed (WDM) signal received on its input 301 to both its first 302 and its second 303 outputs. The switching structure 6 comprises a demultiplexer 7 configured for demultiplexing the multiplexed channels of the WDM signal into a plurality of channels which are transmitted respectively to a plurality of optical gates 9 configured for blocking or letting pass the packets of the time slots of each channel. At the output of the optical gates 9, the different channels are re-multiplexed by a multiplexer 11. The node 100 also comprises a transmitting unit 15 which is configured to emit signals corresponding to the added packets aimed at being inserted in the packet positions freed or emptied by the optical gates 9. An adding optical coupler 13 comprising a first input 131 linked to the output 602 of the switching structure 6, a second input 132 linked to a transmitting unit 15 and an output 133 linked to the output 18 of the node 100. The said adding optical coupler 13 is configured to mix the signals received from its first 131 and its second 132 inputs and for transmitting the mixed signal to its output 133. In such embodiment, the receiving unit 5 comprises one or several fast tunable coherent receivers configured for tuning their local oscillator to the wavelength of the channel comprising the packet that has to be dropped. However, in such receivers, the crosstalk undergone by the detected signal increases with the number of received channels so that crosstalk impairments become very high for high throughput networks comprising a high number of wavelength channels, for example 40 or more.

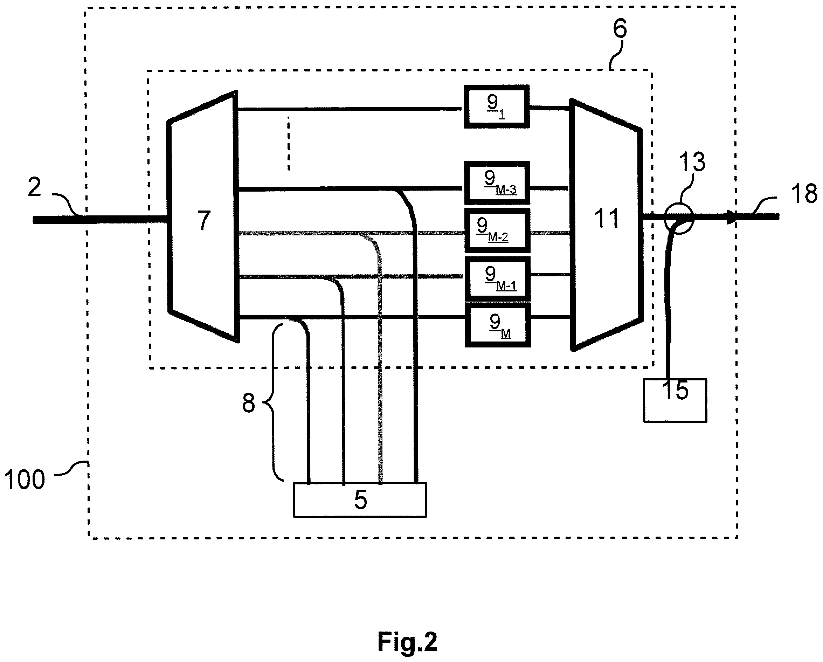

Fig.2 represents an optical packet switching node 100 according to another embodiment of the state of the art. It differs from the embodiment of fig.1 in that there is no dropping optical coupler but the optical fibers of the switching structure 6 corresponding to the different channels are linked respectively to dropped optical fibers 8 for example by an optical splitter, the said dropped optical fibers 8 being linked respectively to a receiving unit 5 which can comprise one or a plurality of coherent or non-coherent receivers. However, the problem with such architecture is that it is not possible to implement in a cost-effective way the switching structure 6 within an integrated circuit for example a silicon based equipment due to the high number of connectors required to link the different dropped optical fibers 8 to the receiver 5.

The NPL documents entitled 'Successful demonstration of the compatibility of optical packet and wavelength circuit switching in optical networks' (35TH EUROPEAN CONFERENCE ON OPTICAL COMMUNICATION, 2009. ECOC '09, VIENNA, AUSTRIA, IEEE, PISCATAWAY, NJ, USA) and 'Packet OADMs for the next generation of ring networks' (BELL LABS TECHNICAL JOURNAL, WILEY, CA, US) disclose such embodiment of the state of the art using semiconductor optical amplifiers as optical gates 9.

### SUMMARY OF THE INVENTION

It is therefore an object of the present invention to overcome the above mentioned drawbacks of the state of the art and to provide a solution for providing a node architecture that minimizes the crosstalk produced at the detection of the dropped packets and that enables the integration of the switching components of the node.

Thus, the present invention refers to an optical packet drop structure of an optical packet switching node of a wavelength division multiplexing optical network, as defined in claim 1.

According to another aspect of the present invention, the switching means comprise a plurality of optical switches, an optical switch comprising an input linked to a respective output of the wavelength demultiplexer, a first output linked to a respective input of the first wavelength multiplexer and a second output linked to a respective input of the second wavelength multiplexer.

According to a further aspect of the present invention, the demultiplexer and the first multiplexer are combined in a single bidirectional device comprising a multiplexed input/output configured to be linked to an optical circulator linked to both an input optical link and an output optical link and a plurality of demultiplexed inputs/outputs, the packet drop structure comprising a plurality of optical reflectors linked respectively to the plurality of demultiplexed inputs/outputs via the switching means, the said switching means being configured for switching optical packets transmitted by a demultiplexed input/output of the bidirectional device toward an optical reflector and/or toward an input of the second wavelength multiplexer.

According to an additional aspect of the present invention, the switching means comprise a plurality of optical switches comprising an input linked to a respective demultiplexed input/output of the bidirectional device, a first output linked to a respective optical reflector and a second output linked to a respective input of the second wavelength multiplexer.

According to another aspect of the present invention, an optical switch comprises:
- splitting means configured for transmitting an optical signal received at the input of the optical switch toward the first and the second outputs of the optical switch,
- a first optical gate located at the first output of the optical switch,
- a second optical gate located at the second output of the optical switch.

According to a further aspect of the present invention, the first optical gate is configured to let pass the optical packets aimed at being broadcasting toward another node of the wavelength division multiplexing optical network and to filter out the other optical packets and the second optical gate is configured to let pass the optical packets aimed at being dropped in the said optical packet switching node and also configured to filter out the other optical packets.

According to an additional aspect of the present invention, the packet drop structure is integrated within a silicon based element.

The embodiments of the present invention also refer to an optical packet switching node linked to an input link and an output link and comprising at least one optical packet drop structure.

According to another aspect of the present invention, the optical packet switching node also comprises an optical circulator linked to the input link, to the output link and to the multiplexed input/ouput of the bidirectional device.

According to a further aspect of the present invention, the optical packet switching node comprises at least one coherent receiver linked to the output of the second multiplexer, the said, at least one, coherent receiver comprising a local oscillator configured to be tuned to the wavelength on which an optical packet to be detected is transmitted.

According to an additional aspect of the present invention, the optical packet switching node comprises one non-coherent receiver linked to the output of the second multiplexer.

According to an additional aspect of the present invention, the optical packet switching node comprises at least two non-coherent receivers, a non-coherent receiver being linked to the output of the second multiplexer via an optical filter, the said optical filter being configured to let pass the optical packets transmitted on a wavelength corresponding to the wavelength detected by the non-coherent receiver and to filter out the other optical packets.

According to another aspect of the present invention, the optical packet switching node comprises at least one tunable laser source configured to be linked to the output link for transmitting optical packets toward other optical packet switching nodes on wavelength channels comprising free packet positions.

According to a further aspect of the present invention the optical packet switching node comprises:
- a plurality of optical packet drop structures,
- a demultiplexing unit comprising at least one polarization demultiplexer and/or at least one spatial mode demultiplexer, the demultiplexing unit comprising an input configured to be linked to the input optical link and a plurality of outputs linked respectively to an input of the plurality of optical drop structures,
- a first multiplexing unit comprising at least one polarization multiplexer and/or at least one spatial mode multiplexer, the first multiplexing unit comprising a plurality of inputs linked respectively to a first output of the plurality of optical packet drop structures and an output configured to be linked to an output optical link
- a second multiplexing unit comprising at least one polarization multiplexer and/or at least one spatial mode multiplexer, the second multiplexing unit comprising a plurality of inputs linked respectively to a second output of the plurality of optical packet drop structures and an output configured to be linked to at least one receiver.

According to another aspect of the present invention, the demultiplexing unit and the first multiplexing unit are combined in a single bidirectional unit.

### BRIEF DESCRIPTION OF THE DRAWINGS

FIG.1 is a diagram of a packet switching node according to a first embodiment of the state of the art;
FIG.2 is a diagram of a packet switching node according to a second embodiment of the state of the art;
FIG.3 is a diagram of a packet switching node according to a first embodiment of the invention;
FIG**.4** is a diagram of an optical switch according to an embodiment of the present invention;
FIG.**5** is a diagram of a configuration of the packet switching node of fig.3;
FIG.**6** is a diagram of a packet switching node according to a second embodiment of the invention;
FIG.7 is a diagram of a configuration of the packet switching node of fig.6;
Fig.8 is a diagram of a first embodiment of a packet switching node in the case of a dual polarization modulation format;
Fig.9 is a diagram of a second embodiment of a packet switching node in the case of a dual polarization modulation format.

In these drawings, the elements having the same reference correspond to elements having a similar function. Furthermore, with references composed of a number and an index, the number designates the class of elements having a common function and the index defines a particular element of the class. For example the reference 60 refers to the reflectors in general or to a reflector among other reflectors whereas the reference 601 refers to a particular reflector.

Besides, the following embodiments are examples. Although the description refers to one or several embodiments, it does not mean that each reference refers to the same embodiment or that the described features apply only for this same embodiment. Features from different embodiments can also be combined to produce additional embodiments.

### DETAILED DESCRIPTION OF THE INVENTION

As used herein, the term "WDM" refers to the acronym Wavelength Division Multiplexing;
As used herein, the term "time slot" in a packet stream transmitted in a channel refers to a time interval wherein a packet is inserted;
As used herein, the term "dropped packet" refers to a packet for which the current node is the egress node so that the said packet is detected by a receiver and the data of the packet are decoded by the receiver. Inversely, the non-dropped packets are transmitted transparently toward another node.

As used herein, the term "broadcasted packet" refers to a packet that has to be sent to another node so that the said packet is transmitted transparently to the output of the node.

The embodiments of the present invention refer to a packet drop structure 20 of an optical packet switching node 101 comprising:
- a demultiplexer 22 for demultiplexing the multiplexed signal received on an input optical link 24, for example an optical fiber, into a plurality of M wavelength channels 26,
- a first multiplexer 28 for re-multiplexing the M de-multiplexed channels 26 in order to be transmitted to an output link 30, for example an optical fiber, toward other nodes of the network,
- a second multiplexer 32 for multiplexing the signals of the channels comprising the packets to be dropped and for transmitting the dropped packets toward a receiving unit 5 and,
- switching means 34 for switching the packets toward the first 28 and/or the second 32 multiplexers.

Two different embodiments of such packet drop structure 20 can be implemented. These two embodiments will now be described in detail.

### 1) First embodiment

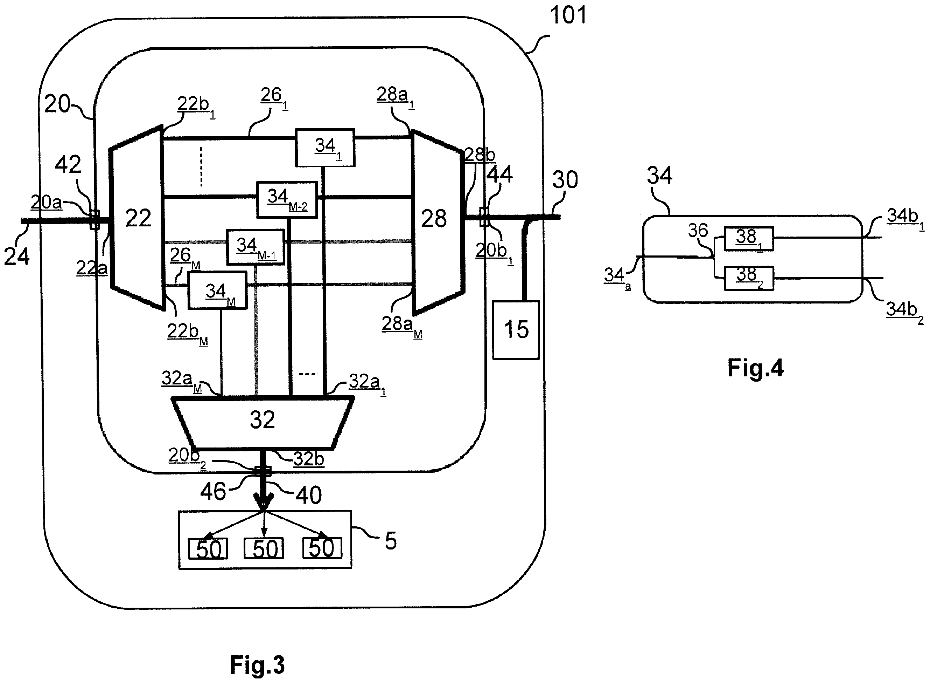

Fig.3 represents an optical packet switching node 101 of a wavelength division multiplexing optical network comprising a plurality of nodes 101. The optical packet switching node 101 comprises an optical packet drop structure 20 which comprises:
- a wavelength demultiplexer 22 comprising an input 22a configured to be linked to an input optical link 24 via an input 20a of the optical packet drop structure 20 and a plurality of outputs 22b₁-22b_{M},
- a first wavelength multiplexer 28 comprising a plurality of inputs 28a₁-28a_{M} and an output 28b configured to be linked to an output optical link 30 via a first output 20b₁ of the optical packet drop structure 20,
- a second wavelength multiplexer 32 comprising a plurality of inputs 32a₁-32a_{N} and an output 32b configured to be linked to at least one receiver 5 via a second output 20b₂ of the optical packet drop structure 20,
- switching means in the form of a plurality of optical switches 34 linked respectively to the outputs 22b of the demultiplexer 22, to the inputs 28a of the first multiplexer 28 and to the inputs 32a of the second multiplexer 32. The optical switches 34 are 1^{∗}2 switches with one input 34a linked to an output 22b of the demultiplexer, a first output 34b₁ linked to an input 28a of the first multiplexer 28 and a second output 34b₂ linked to an input 32a of the second multiplexer 32. An optical switch 34 is configured for switching an optical packet received on its input 34a toward its first ouput 34b1 and/or toward its second output 34b2.

The node 101 also comprises a receving unit 5 comprising at least one (three in the present case) receivers 50 and a transmitting unit 15.

Fig.4 represents an exemplary embodiment of an optical switch 34 comprising:
- splitting means in the form of an optical splitter 36 configured for transmitting an optical signal received at the input 34a of the optical switch 34 toward the first 34b₁ and the second 34b₂ outputs of the optical switch 34,
- a first optical gate 38₁ located at the first output 34b1 of the optical switch 34. The first optical gate 38₁ can be switched between a passing state wherein all the packets are transmitted and a blocking state wherein all the packets are filtered out, the first optical gate 38₁ being configured to let pass the packets aimed at being broadcasted toward another node 101 of the network and to filter out the other packets,
- a second optical gate 38₂ located at the second output 34b₂ of the optical switch 34. The second optical switch 38₂ can be switched between a passing state wherein all the packets are transmitted and a blocking state wherein all the packets are filtered out, the second optical gate 38₂ being and configured to let pass the packets aimed at being dropped in the optical packet switching node 101 of fig.3 and also configured to filter out the other packets.

Thus, an optical packet received at the input of the optical switch 34 is either transmitted toward the first output 34b₁ or toward the second output 34b₂ or toward both outputs 34b₁ and 34b₂ (it is also technically possible to block the received packet on both outputs 34b₁ and 34b₂). Such architecture for the optical switches 34 enables a fast switching between the different configurations and does not add any crosstalk in the transmitted signal however, other configurations of optical switches may also be used within the scope of the present invention.

Furthermore, the optical switches 34 located on each channel between the demultiplexer 22 and the multiplexer 28 enable to transmit only the dropped packets toward the second multiplexer 32 and therefore the receiving unit 5. The number of packets reaching a receiver of the receiving unit 5 is therefore limited which allows limiting the crosstalk in the case of a coherent receiver. Non-coherent receivers may also be used for the detection of the dropped packets. In such case, if more than one receiver is used, a filter, configured for selecting a wavelength channel comprising a dropped packet, is implemented at the input of the receiver. The number of receivers may vary depending on the number of dropped packets which need to be detected simultaneously. If only one non-coherent receiver is used, only one packet from a single wavelength channel corresponding to a waveguide 26 is dropped at a time so that no filter is necessary.

Moreover, the second multiplexer 32 enables to transmit all the dropped packets on a single optical link 40, for example an optical fiber, toward the receiving unit 5 so that an integration of the optical packet drop structure 20 requires only three connectors, a first connector 42 for the input optical link 24, a second connector 44 for the output optical link 30 and a third connector 46 for the connection 40 to the receiving unit 5. The optical packet drop structure 20 can therefore be integrated within a silicon based element or any other photonic integrated circuit.

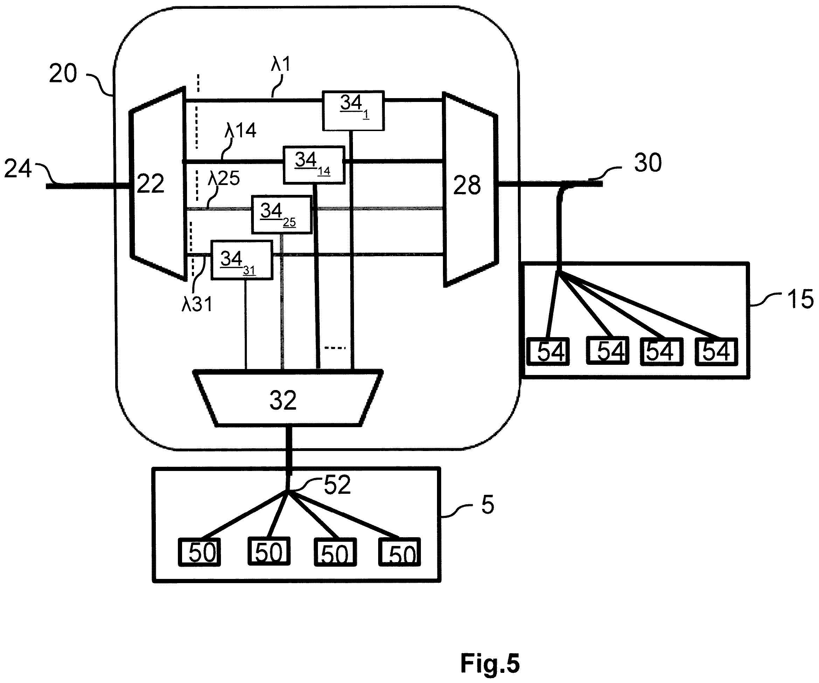

To better understand this first embodiment, an example of functioning of the optical packet drop structure 20 will now be described based on fig.5.

In this example, it is assumed that the optical links of the network, such as the input or the output optical links, transmit forty WDM channels and that four optical packets can be dropped simultaneously (during the same time slot) in each node (other numbers of channels and dropped packets could have been chosen and the number of dropped packets is not necessarily the same in each node). Each channel transmits an optical signal which is divided in time slots comprising the successive optical packets. The time slots of the different channels are synchronized. Thus, at each instant corresponding to a time slot, forty optical packets are transmitted through a link of the network. At the demultiplexer 22, the forty channels are demultiplexed so that the optical signals of the forty channels λ1,λ2...λ40 are transmitted on forty separated optical waveguides 26 linked respectively to 40 optical switches 34. For the channels comprising packets to be dropped, in the present example the channels λ1, λ14, λ25 and λ31, the corresponding optical switches 34₁, 34₁₄, 34₂₅ and 34₃₁ are configured so that the second optical gate 38₂ located at the second output 34b₂ let the received packet pass toward the second multiplexer 32 and the first optical gate 38₁ located at the first output 34_{b1} is configured to block or filter out the received optical packet. If a packet needs to be dropped and also broadcasted to another node of the network, both the first 38₁ and the second 38₂ optical gates can be configured to let the received optical packet pass. For the other channels, the associated optical switches 34 (not represented in fig.5) are configured so that the first optical gate 38₁ lets the received packet toward the first multiplexer pass and the second optical gate 38₂ blocks the received packet. As a consequence, only 4 packets transmitted respectively on the channels λ1, λ14, λ25 and λ31 are transmitted to the second multiplexer 32. These four channels λ1, λ14, λ25 and λ31 are then multiplexed and transmitted toward the receiving unit 5. In such case, the receiving unit 5 comprises four coherent receivers 50 and an optical splitter 52 to transmit the multiplexed signal toward the four coherent receivers 50. Each coherent receiver comprise a local oscillator and the four local oscillators are configured to be tuned respectively to the four wavelengths corresponding to the four channels λ1, λ14, λ25 and λ31.
Besides, with the blocking state of the first optical gate 38₁ in the optical switches 38 associated with the channels λ1, λ14, λ25 and λ31, four packet positions have been freed on the said channels so that four new packets can be inserted by a tunable transmitter or tunable transmitters such as four tunable laser sources, for example fast tunable lasers 54 of the transmitting unit 15. The tunable transmitters may also be implemented as a plurality of fixed laser sources corresponding to the plurality of wavelength channel (or a part of the plurality of wavelength channels).

### 2) Second embodiment

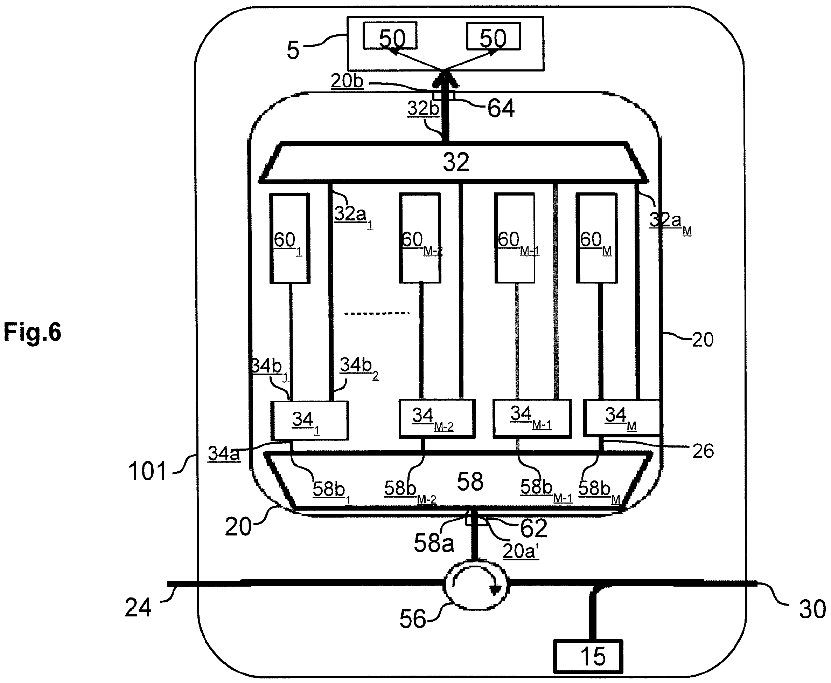

In this second embodiment represented in fig.6, the demultiplexer 22 and the second multiplexer 28 of the first embodiment are combined in a single bidirectional device 58 comprising a multiplexed input/output 58a linked to an optical circulator 56 linked to both the input optical link 24 and the output optical link 30 and a plurality of demultiplexed inputs/outputs 58b. In practice, the elements 22, 28, 32 and 58 can be the same but only the element 58 is used in both directions.
The optical packet drop structure 20 also comprises:
- switching means in the form of a plurality of optical switches 34 similar to the optical switches described in the first embodiment. The optical switches 34 need to be bidirectional but it is usually the case, notably for the configuration described in Fig.4.,
- a multiplexer 32 similar to the second multiplexer of the first embodiment and,
- a plurality of optical reflectors 60 configured for sending back a received optical signal. The optical reflectors 60 are for example implemented with Bragg gratings. Other means for sending back the optical signal may also be used such as an optical circulator with a waveguide looped on the circulator.

The input 34a of the plurality of optical switches 34 is linked respectively to the plurality of demultiplexed inputs/outputs 58b of the bidirectional device 58. The first output 34b₁ of the optical switches 34 is linked to an optical reflector 60 and the second output 34b₂ is linked to an input 32a of the multiplexer 32. The optical switches 34 are configured in the same way as in the first embodiment so that if a received packet has to only be broadcasted toward another node of the network, the first optical gate 38₁ is configured to let the optical packet received on the input pass toward the reflector 60 and the second optical gate 38₂ is configured to filter out the packet. If the packet has only to be dropped, the second optical gate 38₂ is configured to let the packet pass toward the multiplexer 32 and the first optical gate 38₁ is set to block the packet. Finally, if the packet has to be broadcasted and to be dropped, both the first 38₁ and the second 38₂ optical gates are configured to let the packet pass. Thus, a broadcasted packet is sent by the optical switch 34 toward a reflector 60 to be sent back to the bidirectional device 58 and then transmitted to the output link 30 via the optical circulator 56 whereas a dropped packet is sent by the optical switch 34 toward the multiplexer 32 to be multiplexed and then transmitted to a receiving unit 5 for the detection. The receiving unit 5 is also similar to the receiving unit described in the first embodiment. This second embodiment provides some advantages with respect to the first embodiment. Indeed, the optical packet drop structure 20 requires only two connectors:
- a first connector 62 linked to the input/ouput 58a of the bidirectional device 58 and configured to be linked to the optical circulator 56 and,
- a second connector 64 linked to the output 32b of the multiplexer 32 and configured to be linked to the receiving unit 5.
Such limited number of connectors eases and reduces the cost of the integration of the optical packet drop structure 20. It also allows reducing the size of the integrated element. Furthermore, this second embodiment does not require the achievement of crossed optical waveguides which can be technically difficult to realize on integrated devices and which can imply some crosstalk issues.

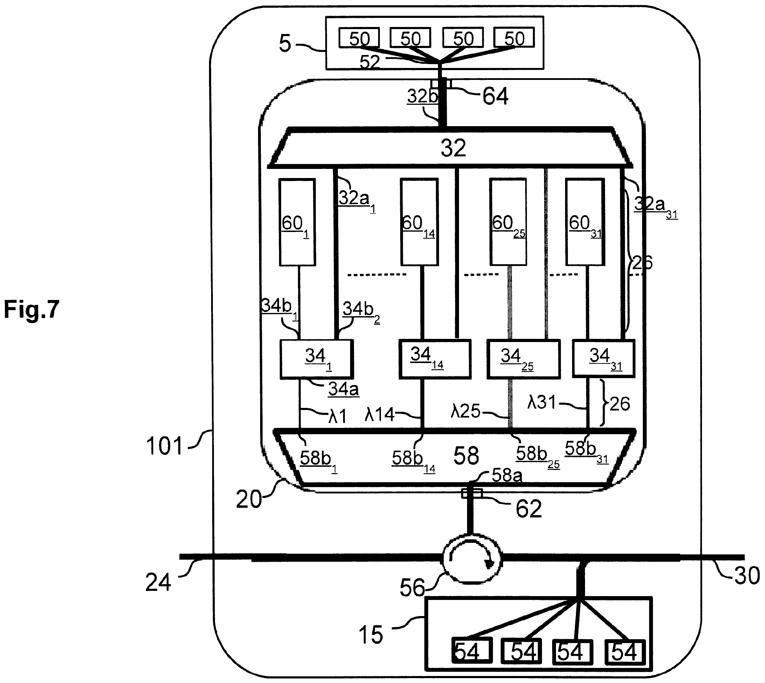

In order to better understand the second embodiment an example of functioning based on fig.7 will now be described.

In this example, as for the first embodiment, it is assumed that the optical links of the network, such as the input or the output optical links, transmit forty WDM channels and that four optical packets are dropped in each node (other numbers of channels and dropped packets could have been chosen and the number of dropped packets is not necessarily the same in each node). Each channel transmits an optical signal which is divided in time slots comprising the successive optical packets. The time slots of the different channels are synchronized. Thus, at each instant corresponding to a time slot, forty optical packets are transmitted through a link of the network. The optical signal received from the input optical link 24 by the optical circulator 56 are transmitted to the input/output 58a of the bidirectional device 58. At the bidirectional device 58, the forty channels are demultiplexed so that the optical signals of the forty channels λ1,λ2...λ40 are transmitted on 40 separated optical waveguides 26 linked respectively to forty optical switches 34. For the channels comprising packets to be dropped, in the present example the channels λ1, λ14, λ25 and λ31, the corresponding optical switches 34₁, 34₁₄, 34₂₅ and 34₃₁ are configured so that the second optical gate 38₂ located at the second output 34_{b2} let the received packet pass toward the multiplexer 32 and the first optical gate 38₁ located at the first output 34_{b1} is configured to block or filter out the received optical packet. If a packet needs to be dropped and also broadcasted to another node of the network, both the first 38₁ and the second 38₂ optical gates can be configured to let the received optical packet pass. For the other channels, the associated optical switches 34 (not represented in fig.7) are configured so that the first optical gate 38₁ lets the received packet pass toward the optical reflector 60 and the second optical gate 38₂ blocks the received packet. As a consequence, only four packets transmitted respectively on the channels λ1, λ14, λ25 and λ31 are transmitted to the multiplexer 32. These four channels λ1, λ14, λ25 and λ31 are then multiplexed and transmitted toward the receiving unit 5. In such case, the receiving unit 5 comprises four coherent receivers 50 and an optical splitter 52 to transmit the multiplexed signal toward the four coherent receivers 50. The coherent receivers are tuned respectively to the 4 wavelength corresponding to the four channels λ1, λ14, λ25 and λ31.

Furthermore, with the blocking state of the first optical gate 381 in the optical switches 34 associated with the channels λ1, λ14, λ25 and λ31, four optical packet positions (within a time slot) have been freed on the said channels so that four new packets can be inserted by a tunable transmitter(s) such as four fast tunable lasers 54 of the transmitting unit 15.

Besides, the optical packet drop structures 20 described before may also be used with optical signals comprising a modulation format with a plurality of spatial modes and/or polarizations. In such case, the node 101 comprises a plurality of optical packet drop structures 20, a demultiplexing unit 70, 82, a first multiplexing unit 74, 82 and a second multiplexing unit 78, 86. The number of optical packet drop structures 20 corresponds to the number of spatial mode and polarizations. The demultiplexing unit 70, 82 configured for demultiplexing the different spatial modes and/or polarizations is added at the input 101a of the node 101 to separate the different polarizations and/or spatial modes of the signal received on the input optical link 24 and each spatial mode and/or polarization is transmitted toward an optical packet drop structure 20. The broadcasted packets transmitted at the output of the first multiplexer 28 of the optical packet drop structures 20 are remultiplexed by the first multiplexing unit 74, 82 to be sent toward the output link 30. The dropped packets transmitted at the output of the second multiplexer 32 of the optical packet drop structures 20 are remultiplexed by the second multiplexing unit 78, 86 to be sent to the receiving unit 5.

In the case of a modulation format combining a plurality of polarizations and a plurality of spatial modes, the demultiplexing unit 70, 82 comprises a polarization demultiplexer with a plurality of outputs corresponding to the plurality of polarizations and a plurality of spatial mode demultiplexers located respectively at the outputs of the polarization demultiplexer. In such case, the first and second multiplexing units comprise a plurality of spatial mode multiplexers combined with a polarization multiplexer.

Alternatively, the demultiplexing unit 70, 82 may comprises a spatial mode demultiplexer with a plurality of outputs corresponding to the plurality of spatial modes and a plurality of polarization demultiplexers located respectively at the outputs of the spatial mode demultiplexer. In such case, the first and second multiplexing unit comprise a plurality of spatial mode multiplexers combined with a polarization multiplexer.

In the case of the second embodiment described previously, the demultiplexing unit and the first multiplexing unit can be combined in a single bidirectional unit 82.

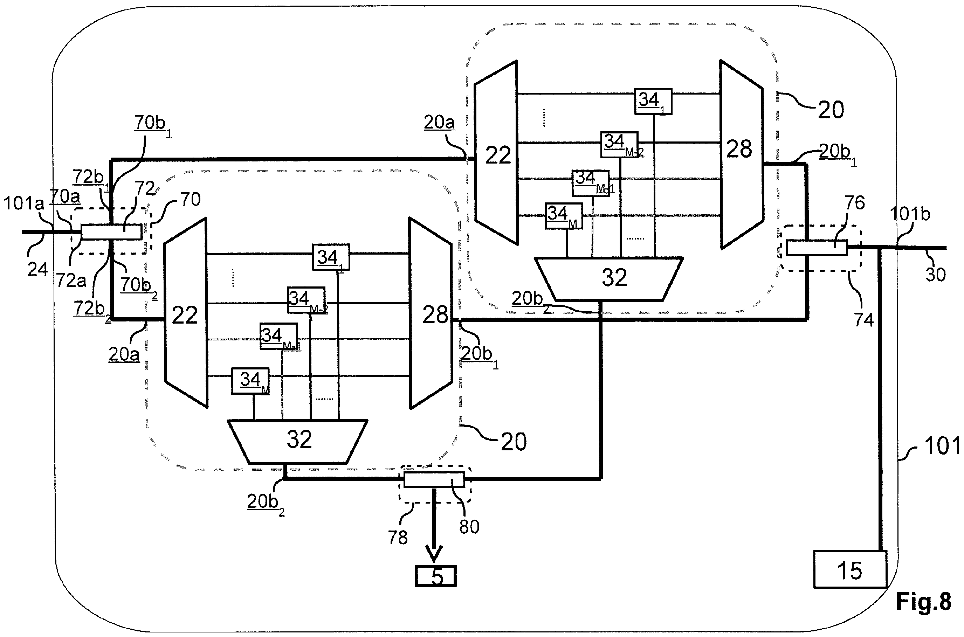

Fig.8 represents an example of a node 101 configured for receiving signals with a dual polarization modulation format. The node 101 comprises two optical packet drop structures 20, a demultiplexing unit 70 comprising a polarization demultiplexer 72 with an input 72a linked to the input link 24 via an input 70a of the demultiplexing 70, a first output 72b₁ linked to the input 20a of an optical packet drop structure 20 via a first output 70b₁ of the demultiplexing unit 70 and a second output 72b₂ linked to the input 20a of the other optical packet drop structure 20 via a second output 70b₂ of the demultiplexing unit 70. The polarization demultiplexer 72 being configured for sending the part of the received signal corresponding to the first polarization on its first output 72b₁ and the part of the received signal corresponding to the second polarization on its second output 72b₂. Both optical packet drop structures process both signals as described previously. The first output 20b₁ of the optical packet drop structures 20 are linked to a first multiplexing unit 74 comprising a polarization multiplexer 76 for remultiplexing both polarizations and sending the remultiplexed signal comprising the broadcasted packets toward the output link 30. The second output 20b₂ of the optical packet drop structures 20 are linked to a second multiplexing unit 78 comprising a polarization multiplexer 80 for remultiplexing both polarization and sending the remultiplexed signal comprising the dropped packets toward the receiving unit 5.

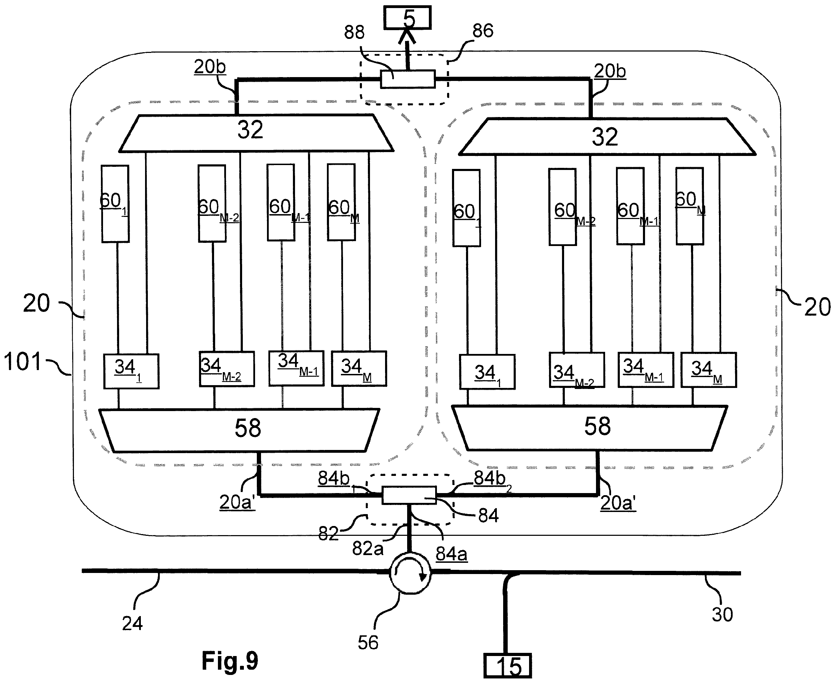

Fig.9 represents an example of a node 101 configured for receiving signals with a dual polarization modulation format in the case of optical packet drop structures 20 according to the second embodiment described previously. The node 101 comprises two optical packet drop structures 20, a bidirectional unit 82 comprising a polarization multiplexer/demultiplexer 84 with a multiplexed input/output 84a linked to the optical coupler 56 via an input/output 82a of the bidirectional unit 82, a first demultiplexed input/output 84b₁ linked to the input/output 20a' of an optical packet drop structure 20 and a second demultiplexed input/output 84b₂ linked to the input/output 20a' of the other optical packet drop structure 20. The polarization multiplexer/demultiplexer 84 being configured for sending the part of the signal received from the optical circulator 56 corresponding to the first polarization on its first output 84b₁ and the part of the signal received from the optical circulator 56 corresponding to the second polarization on its second output 84b₂. Both optical packet drop structures 20 process both signals as described previously. The output 20b of the optical packet drop structures 20 are linked to a multiplexing unit 86 comprising a polarization multiplexer 88 for remultiplexing both polarization and sending the remultiplexed signal comprising the dropped packets toward the receiving unit 5. The broadcasted packets of both optical packet drop structures 20 are sent back to the polarization multiplexer/demultiplexer 84 to be remultiplexed and transmitted toward the output link 30 via the optical circulator 56.
In both configurations described in figures 8 and 9, a transmitting unit 15 enables to add packets in the free packets positions (for each time slot) of both polarizations.

Thus, the embodiments described herein enables to provide an optical packet drop structure wherein the crosstalk at the receiver is reduced and which can be implemented in an integrated chip due to the low number of connectors required for linking the optical packet drop structure to the other elements of the node. Moreover, such configuration combined with the proposed configuration for the switching means enables a fast reconfiguration of the switches without introducing impairments to the optical signal so that packet granularity with high throughput signals can be achieved. Furthermore, these optical packet drop structures may also be used with optical signals comprising multiple spatial modes and/or multiple polarizations, a packet drop structure processing a signal corresponding to one spatial mode of one polarization, the different spatial modes and polarizations being separated before being transmitted to the different optical drop structure and remultiplexed to be sent to the receivers or the output link.

## Claims

1. Optical packet drop structure (20) of an optical packet switching node (101) of a wavelength division multiplexing optical network, the optical packet drop structure (20) being integrated within a photonic integrated circuit and comprising:
- a wavelength demultiplexer (22, 58) comprising an input (22a, 58a) configured to be linked to an input optical link (24) via an input (20a, 20a') of the optical packet drop structure (20) and a plurality of outputs (22b, 58b),
- a first wavelength multiplexer (28, 58) comprising a plurality of inputs (28a, 58b) and an output (28b, 58a) configured to be linked to an output optical link (30) via a first output (20b₁, 20a') of the optical packet drop structure (20),
- a second wavelength multiplexer (32) comprising a plurality of inputs (32a) and an output (32b) configured to be linked to a plurality of receivers (50) via a second output (20b₂, 20b) of the optical packet drop structure (20),
- switching means (34) configured for switching optical packets transmitted by an output (22b, 58b) of the wavelength demultiplexer (22, 58) toward an input (28a, 58b) of the first wavelength multiplexer (28, 58) and/or toward an input (32a) of the second wavelength multiplexer (32), said switching means (34) comprising
- splitting means in the form of an optical splitter (36) configurable to transmit an optical signal received at an input (34a) of the switching means (34) toward a first (34b₁) and a second (34b₂) outputs of the switching means (34),
- a first optical gate (38₁) located at the first output (34b₁) of the switching means (34) and configurable to be switched between a passing state wherein all the packets are transmitted and a blocking state wherein all the packets are filtered out,
- a second optical gate (38₂) located at the second output (34b₂) of the switching means (34) and configurable to be switched between a passing state wherein all the packets are transmitted and a blocking state wherein all the packets are filtered out.

2. Optical packet drop structure (20) in accordance with claim 1 wherein the switching means (34) comprise a plurality of optical switches (34), an optical switch (34) comprising :
- an input (34a) linked to a respective output (22b, 58b) of the wavelength demultiplexer (22, 58),
- a first output (34b₁) linked to a respective input (28a, 58b) of the first wavelength multiplexer (28, 58),
- a second output (34b₂) linked to a respective input (32a) of the second wavelength multiplexer (32),
- the splitting means in the form of an optical splitter (36) configurable to transmit an optical signal received at the input (34a) of the optical switch (34) toward the first (34b₁) and the second (34b₂) outputs of the optical switch (34),
- the first optical gate (38₁) located at the first output (34b₁) of the optical switch (34) and configurable to be switched between a passing state wherein all the packets are transmitted and a blocking state wherein all the packets are filtered out,
- the second optical gate (38₂) located at the second output (34b₂) of the optical switch (34) and configurable to be switched between a passing state wherein all the packets are transmitted and a blocking state wherein all the packets are filtered out.

3. Optical packet drop structure (20) in accordance with claim 1 wherein the demultiplexer (22) and the first multiplexer (28) are combined in a single bidirectional device (58) comprising a multiplexed input/output (58a) configured to be linked to an optical circulator (56) linked to both:
- an input optical link (24) and,
- an output optical link (30),
the single bidirectional device also comprising a plurality of demultiplexed inputs/outputs (58b),
the packet drop structure (20) comprising a plurality of optical reflectors (60) linked
respectively to the plurality of demultiplexed inputs/outputs (58b) via the switching means (34), the said switching means (34) being configured for switching optical packets transmitted by a demultiplexed input/output (58b) of the bidirectional device (58) toward an optical reflector (60) and/or toward an input (32a) of the second wavelength multiplexer (32).

4. Optical packet drop structure (20) in accordance with claim 3 wherein the switching means (34) comprise a plurality of optical switches (34), an optical switch (34) comprising :
- an input (34a) linked to a respective demultiplexed input/output (58b) of the bidirectional device (58),
- a first output (34b₁) linked to a respective optical reflector (60),
- a second output (34b₂) linked to a respective input (32a) of the second wavelength multiplexer (32),
- the splitting means in the form of an optical splitter (36) configurable to transmit an optical signal received at the input (34a) of the optical switch (34) toward the first (34b₁) and the second (34b₂) outputs of the optical switch (34),
- the first optical gate (38₁) located at the first output (34b₁) of the optical switch (34) and configurable to be switched between a passing state wherein all the packets are transmitted and a blocking state wherein all the packets are filtered out,
- the second optical gate (38₂) located at the second output (34b₂) of the optical switch (34) and configurable to be switched between a passing state wherein all the packets are transmitted and a blocking state wherein all the packets are filtered out.

5. Optical packet drop structure (20) in accordance with claim 1 wherein the first optical gate (38₁) is configured to let pass the optical packets aimed at being broadcasting toward another node of the wavelength division multiplexing optical network and to filter out the other optical packets and wherein,
the second optical gate (38₂) is configured to let pass the optical packets aimed at being dropped in the said optical packet switching node (101) and also configured to filter out the other optical packets.

6. Optical packet drop structure (20) in accordance with one of the previous claims wherein the photonic integrated circuit is a silicon based element.

7. Optical packet switching node (101) linked to an input link (24) and an output link (30) and comprising at least one optical packet drop structure (20) in accordance with one of the claims 1 to 6.

8. Optical packet switching node (101) in accordance with claim 7 in combination with claim 3 or 4 wherein it also comprises an optical circulator (56) linked to the input link (24), to the output link (30) and to the multiplexed input/output (58a) of the bidirectional device (58).

9. Optical packet switching node (101) in accordance with claim 7 or8 wherein it comprises at least one coherent receiver (50) linked to the output (32b) of the second multiplexer (32), the said, at least one, coherent receiver (50) comprising a local oscillator configured to be tuned to the wavelength on which an optical packet to be detected is transmitted.

10. Optical packet switching node (101) in accordance with claim 7 or 8 wherein it comprises one non-coherent receiver linked to the output of the second multiplexer

11. Optical packet switching node (101) in accordance with claim 7 or 8 wherein it comprises at least two non-coherent receivers, each non-coherent receiver being linked to the output of the second multiplexer (32b) via an associated optical filter, the said optical filter being configured to let pass the optical packets transmitted on a wavelength corresponding to the wavelength detected by the associated non-coherent receiver and to filter out the other optical packets.

12. Optical packet switching node (101) in accordance with one of the claims 7 to 11 wherein it comprises at least one tunable laser source (54) configured to be linked to the output link for transmitting optical packets toward other optical packet switching nodes on wavelength channels comprising free packet positions.

13. Optical packet switching node (101) in accordance with one of the claims 7 to 12 wherein it comprises:
- a plurality of optical packet drop structures (20),
- a demultiplexing unit (70, 82) comprising at least one polarization demultiplexer and/or at least one spatial mode demultiplexer, the demultiplexing unit (70, 82) comprising an input (70a, 82a) configured to be linked to the input optical link (24) and a plurality of outputs linked respectively to an input (20a, 20a') of the plurality of optical drop structures (20),
- a first multiplexing unit (74, 82) comprising at least one polarization multiplexer and/or at least one spatial mode multiplexer, the first multiplexing unit (74, 82) comprising a plurality of inputs linked respectively to a first output (20b₁, 20a') of the plurality of optical packet drop structures (20) and an output configured to be linked to an output optical link (30),
- a second multiplexing unit (78, 86) comprising at least one polarization multiplexer and at least one spatial mode multiplexer, the second multiplexing unit comprising a plurality of inputs linked respectively to a second output (20b₂, 20b) of the plurality of optical packet drop structures (20) and an output configured to be linked to at least one receiver (50).

14. Optical packet switching node (101) in accordance with claim 13 in combination with claim 3 wherein the demultiplexing unit and the first multiplexing unit are combined in a single bidirectional unit (82).

## Patentansprüche

1. Optische Paket-Dropstruktur (20) eines optischen Paketvermittlungsknotens (101) eines optischen Wellenlängen-Multiplexnetzwerks, wobei die optische Paket-Dropstruktur (20) innerhalb einer photonischen integrierten Schaltung integriert ist und Folgendes umfasst:
- einen Wellenlängen-Demultiplexer (22, 58), der einen Eingang (22a, 58a) umfasst, der dazu ausgelegt ist, über einen Eingang (20a, 20a') der optischen Paket-Dropstruktur (20) und eine Vielzahl von Ausgängen (22b, 58b) mit einer optischen Eingangsverbindung (24) verknüpft zu werden,
- einen ersten Wellenlängen-Multiplexer (28, 58), der eine Vielzahl von Eingängen (28a, 58b) und einen Ausgang (28b, 58a) umfasst, der dazu ausgelegt ist, über einen ersten Ausgang (20b₁, 20a') der optischen Paket-Dropstruktur (20) mit einem optischen Ausgangslink (30) verknüpft zu werden,
- einen zweiten Wellenlängen-Multiplexer (32), der eine Vielzahl von Eingängen (32a) und einen Ausgang (32b) umfasst, der dazu ausgelegt ist, über einen zweiten Ausgang (20b₂, 20b) der optischen Paket-Dropstruktur (20) mit einer Vielzahl von Empfängern (50) verknüpft zu werden,
- eine Schalteinrichtung (34), die dazu ausgelegt ist, durch einen Ausgang (22b, 58b) des Wellenlängen-Demultiplexers (22, 58) übertragene optische Pakete in Richtung eines Eingangs (28a, 58b) des ersten Wellenlängen-Multiplexers (28, 58) und/oder in Richtung eines Eingangs (32a) des zweiten Wellenlängen-Multiplexers (32) zu schalten, wobei die Schalteinrichtung (34) Folgendes umfasst:
- eine Teilungseinrichtung in der Form eines optischen Splitters (36), die konfigurierbar ist, um ein an einem Eingang (34a) der Schalteinrichtung (34) empfangenes optisches Signal in Richtung eines ersten (34b₁) und eines zweiten (34b₂) Ausgangs der Schalteinrichtung (34) zu übertragen,
- ein erstes optisches Gate (38₁), das sich an dem ersten Ausgang (34b₁) der Schalteinrichtung (34) befindet und konfigurierbar ist, um zwischen einem Durchlasszustand, in dem alle Pakete übertragen werden, und einem Blockierzustand, in dem alle Pakete herausgefiltert werden, umgeschaltet zu werden,
- ein zweites optisches Gate (38₂), das sich an dem zweiten Ausgang (34b₂) der Schalteinrichtung (34) befindet und konfigurierbar ist, um zwischen einem Durchlasszustand, in dem alle Pakete übertragen werden, und einem Blockierzustand, in dem alle Pakete herausgefiltert werden, umgeschaltet zu werden.

2. Optische Paket-Dropstruktur (20) im Einklang mit Anspruch 1,
wobei die Schalteinrichtung (34) eine Vielzahl von optischen Schaltern (34) umfasst und ein optischer Schalter (34) Folgendes umfasst:
- einen Eingang (34a), der mit einem entsprechenden Ausgang (22b, 58b) des Wellenlängen-Demultiplexers (22, 58) verknüpft ist,
- einen ersten Ausgang (34b₁), der mit einem entsprechenden Eingang (28a, 58b) des ersten Wellenlängen-Multiplexers (28, 58) verknüpft ist,
- einen zweiten Ausgang (34b₂), der mit einem entsprechenden Eingang (32a) des zweiten Wellenlängen-Multiplexers (32) verknüpft ist,
- die Teilungseinrichtung in der Form eines optischen Splitters (36), die konfigurierbar ist, um ein an dem Eingang (34a) des optischen Schalters (34) empfangenes optisches Signal in Richtung des ersten (34b₁) und des zweiten (34b₂) Ausgangs des optischen Schalters (34) zu übertragen,
- das erste optische Gate (38₁), das sich an dem ersten Ausgang (34b₁) des optischen Schalters (34) befindet und konfigurierbar ist, um zwischen einem Durchlasszustand, in dem alle Pakete übertragen werden, und einem Blockierzustand, in dem alle Pakete herausgefiltert werden, umgeschaltet zu werden,
- das zweite optische Gate (38₂), das sich an dem zweiten Ausgang (34b₂) des optischen Schalters (34) befindet und konfigurierbar ist, um zwischen einem Durchlasszustand, in dem alle Pakete übertragen werden, und einem Blockierzustand, in dem alle Pakete herausgefiltert werden, umgeschaltet zu werden.

3. Optische Paket-Dropstruktur (20) im Einklang mit Anspruch 1,
wobei der Demultiplexer (22) und der erste Multiplexer (28) in einer einzelnen bidirektionalen Vorrichtung (58) kombiniert sind, die einen multiplexierten Eingang/Ausgang (58a) umfasst, der dazu ausgelegt ist, mit einem optischen Zirkulator (56) verknüpft zu werden, der mit den beiden folgenden Links verknüpft ist:
- einem optischen Eingangslink (24) und,
- einem optischen Ausgangslink (30),
wobei die einzelne bidirektionale Vorrichtung auch eine Vielzahl von demultiplexierten Eingängen/Ausgängen (58b) umfasst,
die Paket-Dropstruktur (20) eine Vielzahl von optischen Reflektoren (60) umfasst, die jeweils mit der Vielzahl von demultiplexierten Eingängen/Ausgängen (58b) über die Schalteinrichtung (34) verknüpft sind, wobei die Schalteinrichtung (34) dazu ausgelegt ist, von einem demultiplexierten Eingang/Ausgang (58b) der bidirektionalen Vorrichtung (58) übertragene optische Pakete in Richtung eines optischen Reflektors (60) und/oder in Richtung eines Eingangs (32a) des zweiten Wellenlängen-Multiplexers (32) umzuschalten.

4. Optische Paket-Dropstruktur (20) im Einklang mit Anspruch 3,
wobei die Schalteinrichtung (34) eine Vielzahl von optischen Schaltern (34) umfasst und ein optischer Schalter (34) Folgendes umfasst:
- einen Eingang (34a), der mit einem entsprechenden demultiplexierten Eingang/Ausgang (58b) der bidirektionalen Vorrichtung (58) verknüpft ist,
- einen ersten Ausgang (34b₁), der mit einem entsprechenden optischen Reflektor (60) verknüpft ist,
- einen zweiten Ausgang (34b₂), der mit einem entsprechenden Eingang (32a) des zweiten Wellenlängen-Multiplexers (32) verknüpft ist,
- die Teilungseinrichtung in der Form eines optischen Splitters (36), die konfigurierbar ist, um ein an dem Eingang (34a) des optischen Schalters (34) empfangenes optisches Signal in Richtung des ersten (34b₁) und des zweiten (34b₂) Ausgangs des optischen Schalters (34) zu übertragen,
- das erste optische Gate (38₁), das sich an dem ersten Ausgang (34b₁) des optischen Schalters (34) befindet und konfigurierbar ist, um zwischen einem Durchlasszustand, in dem alle Pakete übertragen werden, und einem Blockierzustand, in dem alle Pakete herausgefiltert werden, umgeschaltet zu werden,
- das zweite optische Gate (38₂), das sich an dem zweiten Ausgang (34b₂) des optischen Schalters (34) befindet und konfigurierbar ist, um zwischen einem Durchlasszustand, in dem alle Pakete übertragen werden, und einem Blockierzustand, in dem alle Pakete herausgefiltert werden, umgeschaltet zu werden.

5. Optische Paket-Dropstruktur (20) im Einklang mit Anspruch 1,
wobei das erste optische Gate (38₁) dazu ausgelegt ist, die optischen Pakete, die vorgesehen sind, in Richtung eines weiteren Knotens des optischen Wellenlängen-Multiplexnetzwerks übertragen zu werden, durchzulassen und die anderen optischen Pakete herauszufiltern, und
wobei das zweite optische Gate (38₂) dazu ausgelegt ist, die optischen Pakete, die vorgesehen sind, in dem optischen Paketvermittlungsknoten (101) weggeworfen zu werden, durchzulassen, und außerdem dazu ausgelegt ist, die anderen optischen Pakete herauszufiltern.

6. Optische Paket-Dropstruktur (20) im Einklang mit einem der vorhergehenden Ansprüche, wobei die photonische integrierte Schaltung ein siliziumbasiertes Element ist.

7. Optischer Paketvermittlungsknoten (101), der mit einem Eingangslink (24) und einem Ausgangslink (30) verknüpft ist und mindestens eine optische Paket-Dropstruktur (20) im Einklang mit einem der Ansprüche 1 bis 6 umfasst.

8. Optischer Paketvermittlungsknoten (101) im Einklang mit Anspruch 7 in Kombination mit Anspruch 3 oder 4,
wobei er auch einen optischen Zirkulator (56) umfasst, der mit dem Eingangslink (24), dem Ausgangslink (30) und dem multiplexierten Eingang/Ausgang (58a) der bidirektionalen Vorrichtung (58) verknüpft ist.

9. Optischer Paketvermittlungsknoten (101) im Einklang mit Anspruch 7 oder 8,
wobei er mindestens einen kohärenten Empfänger (50) umfasst, der mit dem Ausgang (32b) des zweiten Multiplexers (32) verknüpft ist, wobei der mindestens eine kohärente Empfänger (50) einen Lokaloszillator umfasst, der dazu ausgelegt ist, auf die Wellenlänge abgestimmt zu werden, auf der ein zu erfassendes optisches Paket übertragen wird.

10. Optischer Paketvermittlungsknoten (101) im Einklang mit Anspruch 7 oder 8,
wobei er einen nicht kohärenten Empfänger umfasst, der mit dem Ausgang des zweiten Multiplexers verknüpft ist.

11. Optischer Paketvermittlungsknoten (101) im Einklang mit Anspruch 7 oder 8,
wobei er mindestens zwei nicht kohärente Empfänger umfasst, die jeweils über einen verbundenen optischen Filter mit dem Ausgang des zweiten Multiplexers (32b) verknüpft sind, wobei der optische Filter dazu ausgelegt ist, die optischen Pakete, die auf einer Wellenlänge übertragen werden, die der von dem verbundenen nicht kohärenten Empfänger erfassten Wellenlänge entspricht, durchzulassen und die anderen optischen Pakete herauszufiltern.

12. Optischer Paketvermittlungsknoten (101) im Einklang mit einem der Ansprüche 7 bis 11,
wobei er mindestens eine abstimmbare Laserquelle (54) umfasst, die dazu ausgelegt ist, mit dem Ausgangslink verknüpft zu werden, um optische Pakete in Richtung anderer optischer Paketvermittlungsknoten auf Wellenlängenkanälen zu übertragen, die freie Paketpositionen umfassen.

13. Optischer Paketvermittlungsknoten (101) im Einklang mit einem der Ansprüche 7 bis 12, Folgendes umfassend:
- eine Vielzahl von optischen Paket-Dropstrukturen (20),
- eine Demultiplexiereinheit (70, 82), die mindestens einen Polarisations-Demultiplexer und/oder mindestens einen Raummodus-Demultiplexer umfasst, wobei die Demultiplexiereinheit (70, 82) einen Eingang (70a, 82a) umfasst, der dazu ausgelegt ist, mit dem optischen Eingangslink (24) und einer Vielzahl von Ausgängen verknüpft zu werden, die jeweils mit einem Eingang (20a, 20a') der Vielzahl von optischen Paket-Dropstrukturen (20) verknüpft sind,
- eine erste Multiplexiereinheit (74, 82), die mindestens einen Polarisations-Multiplexer und/oder mindestens einen Raummodus-Multiplexer umfasst, wobei die erste Multiplexiereinheit (74, 82) eine Vielzahl von Eingängen umfasst, die jeweils mit einem ersten Ausgang (20b₁, 20a') der Vielzahl von optischen Paket-Dropstrukturen (20) verknüpft sind, und einen Ausgang, der dazu ausgelegt ist, mit einem optischen Ausgangslink (30) verknüpft zu werden,
- eine zweite Multiplexiereinheit (78, 86), die mindestens einen Polarisations-Multiplexer und mindestens einen Raummodus-Multiplexer umfasst, wobei die zweite Multiplexiereinheit eine Vielzahl von Eingängen umfasst, die jeweils mit einem zweiten Ausgang (20b₂, 20b)) der Vielzahl von optischen Paket-Dropstrukturen (20) verknüpft sind, und einen Ausgang, der dazu ausgelegt ist, mit mindestens einem Empfänger (50) verknüpft zu werden.

14. Optischer Paketvermittlungsknoten (101) im Einklang mit Anspruch 13 in Kombination mit Anspruch 3,
wobei die Demultiplexiereinheit und die erste Multiplexiereinheit in einer einzelnen bidirektionalen Einheit (82) kombiniert sind.

## Revendications

1. Structure optique de dépôt de paquets (20) d'un nœud de commutation optique de paquets (101) dans un réseau optique à multiplexage par répartition des longueurs d'onde, la structure optique de dépôt de paquets (20) étant intégrée dans un circuit intégré photonique et comprenant :
- un démultiplexeur de longueurs d'onde (22, 58) comprenant une entrée (22a, 58a) configurée pour être reliée à une liaison optique d'entrée (24) à l'aide d'une entrée (20a, 20a') de la structure optique de dépôt de paquets (20) et une pluralité de sorties (22b, 58b),
- un premier multiplexeur de longueurs d'onde (28, 58) comprenant une pluralité d'entrées (28a, 58b) et une sortie (28b, 58a) configurée pour être reliée à une liaison optique de sortie (30) à l'aide d'une première sortie (20b₁, 20a') de la structure optique de dépôt de paquets (20),
- un second multiplexeur de longueurs d'onde (32) comprenant une pluralité d'entrées (32a) et une sortie (32b) configurée pour être reliée à une pluralité de récepteurs (50) à l'aide d'une seconde sortie (20b₂, 20b) de la structure optique de dépôt de paquets (20),
- des moyens de commutation (34) configurés pour commuter des paquets optiques transmis par une sortie (22b, 58b) du démultiplexeur de longueurs d'onde (22, 58) vers une entrée (28a, 58b) du premier multiplexeur de longueurs d'onde (28, 58) et/ou vers une entrée (32a) du second multiplexeur de longueurs d'onde (32), lesdits moyens de commutation (34) comprenant
- des moyens de séparation sous la forme d'un séparateur optique (36) configurable pour transmettre un signal optique reçu à une entrée (34a) des moyens de commutation (34) vers une première (34b₁) et une seconde (34b₂) sortie des moyens de commutation (34),
- une première porte optique (38₁) située à la première sortie (34b₁) des moyens de commutation (34) et configurable pour être commutée entre un état de passage dans lequel tous les paquets sont transmis et un état de blocage dans lequel tous les paquets sont exclus par filtrage,
- une seconde porte optique (38₂) située à la seconde sortie (34b₂) des moyens de commutation (34) et configurable pour être commutée entre un état de passage dans lequel tous les paquets sont transmis et un état de blocage dans lequel tous les paquets sont exclus par filtrage.

2. Structure optique de dépôt de paquets (20) selon la revendication 1, dans laquelle les moyens de commutation (34) comprennent une pluralité de commutateurs optiques (34), un commutateur optique (34) comprenant :
- une entrée (34a) reliée à une sortie respective (22b, 58b) du démultiplexeur de longueurs d'onde (22, 58),
- une première sortie (34b₁) reliée à une entrée respective (28a, 58b) du premier multiplexeur de longueurs d'onde (28, 58),
- une seconde sortie (34b₂) reliée à une entrée respective (32a) du second multiplexeur de longueurs d'onde (32),
- les moyens de division sous la forme d'un séparateur optique (36) configurable pour transmettre un signal optique reçu à l'entrée (34a) du commutateur optique (34) vers la première (34b₁) et la seconde (34b₂) sortie du commutateur optique (34),
- la première porte optique (38₁) située à la première sortie (34b₁) du commutateur optique (34) et configurable pour être commutée entre un état de passage dans lequel tous les paquets sont transmis et un état de blocage dans lequel tous les paquets sont exclus par filtrage,
- la seconde porte optique (38₂) située à la seconde sortie (34b₂) du commutateur optique (34) et configurable pour être commutée entre un état de passage dans lequel tous les paquets sont transmis et un état de blocage dans lequel tous les paquets sont exclus par filtrage.

3. Structure optique de dépôt de paquets (20) selon la revendication 1, dans laquelle le démultiplexeur (22) et le premier multiplexeur (28) sont combinés en un dispositif bidirectionnel unique (58) comprenant une entrée/sortie multiplexée (58a) configurée pour être reliée à un dispositif de circulation optique (56) relié à la fois à :
- une liaison optique d'entrée (24) et,
- une liaison optique de sortie (30),
le dispositif bidirectionnel unique comprenant également une pluralité d'entrées/sorties démultiplexées (58b),
la structure de dépôt de paquets (20) comprenant une pluralité de réflecteurs optiques (60) reliés respectivement à la pluralité d'entrées/sorties démultiplexées (58b) à l'aide des moyens de commutation (34), lesdits moyens de commutation (34) étant configurés pour commuter des paquets optiques transmis par une entrée/sortie démultiplexée (58b) du dispositif bidirectionnel (58) vers un réflecteur optique (60) et/ou vers une entrée (32a) du second multiplexeur de longueurs d'onde (32).

4. Structure optique de dépôt de paquets (20) selon la revendication 3, dans laquelle les moyens de commutation (34) comprennent une pluralité de commutateurs optiques (34), un commutateur optique (34) comprenant :
- une entrée (34a) reliée à une entrée/sortie démultiplexée respective (58b) du dispositif bidirectionnel (58),
- une première sortie (34b₁) reliée à un réflecteur optique respectif (60),
- une seconde sortie (34b₂) reliée à une entrée respective (32a) du second multiplexeur de longueurs d'onde (32),
- les moyens de séparation sous la forme d'un séparateur optique (36) configurable pour transmettre un signal optique reçu à l'entrée (34a) du commutateur optique (34) vers la première (34b₁) et la seconde (34b₂) sortie du commutateur optique (34),
- la première porte optique (38₁) située à la première sortie (34b₁) du commutateur optique (34) et configurable pour être commutée entre un état de passage dans lequel tous les paquets sont transmis et un état de blocage dans lequel tous les paquets sont exclus par filtrage,
- la seconde porte optique (38₂) située à la seconde sortie (34b₂) du commutateur optique (34) et configurable pour être commutée entre un état de passage dans lequel tous les paquets sont transmis et un état de blocage dans lequel tous les paquets sont exclus par filtrage.

5. Structure optique de dépôt de paquets (20) selon la revendication 1, dans laquelle la première porte optique (38₁) est configurée pour laisser passer les paquets optiques destinés à être diffusés vers un autre nœud du réseau optique de multiplexage par répartition de longueurs d'onde et pour exclure par filtrage les autres paquets optiques et dans laquelle la seconde porte optique (38₂) est configurée pour laisser passer les paquets optiques destinés à être déposés dans ledit nœud de commutation de paquets optiques (101) et également configurée pour exclure par filtrage les autres paquets optiques.

6. Structure optique de dépôt de paquets (20) selon l'une des revendications précédentes, dans laquelle le circuit intégré photonique est un élément à base de silicium.

7. Nœud de commutation optique de paquets (101) relié à une liaison d'entrée (24) et à une liaison de sortie (30) et comprenant au moins une structure optique de dépôt de paquets (20) selon l'une des revendications 1 à 6.

8. Nœud de commutation optique de paquets (101) selon la revendication 7 en combinaison avec la revendication 3 ou 4, dans lequel est également compris un dispositif de circulation optique (56) relié à la liaison d'entrée (24), à la liaison de sortie (30) et à l'entrée/sortie multiplexée (58a) du dispositif bidirectionnel (58).

9. Nœud de commutation optique de paquets (101) selon la revendication 7 ou 8, dans lequel est compris au moins un récepteur cohérent (50) relié à la sortie (32b) du second multiplexeur (32), ledit au moins un récepteur cohérent (50) comprenant un oscillateur local configuré pour être accordé sur la longueur d'onde sur laquelle est transmis un paquet optique à détecter.

10. Nœud de commutation optique de paquets (101) selon la revendication 7 ou 8, dans lequel est compris un récepteur non cohérent relié à la sortie du second multiplexeur.

11. Nœud de commutation optique de paquets (101) selon la revendication 7 ou 8, dans lequel sont compris au moins deux récepteurs non cohérents, chaque récepteur non cohérent étant relié à la sortie du second multiplexeur (32b) à l'aide d'un filtre optique associé, ledit filtre optique étant configuré pour laisser passer les paquets optiques transmis sur une longueur d'onde correspondant à la longueur d'onde détectée par le récepteur non cohérent associé et pour exclure par filtrage les autres paquets optiques.

12. Nœud de commutation optique de paquets (101) selon l'une des revendications 7 à 11, dans lequel est comprise au moins une source laser accordable (54) configurée pour être reliée à la liaison de sortie afin de transmettre des paquets optiques vers d'autres nœuds optiques de commutation de paquets sur des canaux de longueurs d'onde comprenant des positions de paquets libres.

13. Nœud de commutation optique de paquets (101) selon l'une des revendications 7 à 12, dans lequel sont comprises :
- une pluralité de structures optiques de dépôt de paquets (20),
- une unité de démultiplexage (70, 82) comprenant au moins un démultiplexeur de polarisation et/ou au moins un démultiplexeur en mode spatial, l'unité de démultiplexage (70, 82) comprenant une entrée (70a, 82a) configurée pour être reliée à la liaison optique d'entrée (24) et une pluralité de sorties reliées respectivement à une entrée (20a, 20a') de la pluralité de structures optiques de dépôt (20),
- une première unité de multiplexage (74, 82) comprenant au moins un multiplexeur de polarisation et/ou au moins un multiplexeur en mode spatial, la première unité de multiplexage (74, 82) comprenant une pluralité d'entrées reliées respectivement à une première sortie (20b_{1;} 20a') de la pluralité de structures optiques de dépôt de paquets (20) et une sortie configurée pour être reliée à une liaison optique de sortie (30),
- une seconde unité de multiplexage (78, 86) comprenant au moins un multiplexeur de polarisation et au moins un multiplexeur en mode spatial, la seconde unité de multiplexage comprenant une pluralité d'entrées reliées respectivement à une seconde sortie (20b₂, 20b) de la pluralité de structures optiques de dépôt de paquets (20) et une sortie configurée pour être reliée à au moins un récepteur (50).

14. Nœud de commutation optique de paquets (101) selon la revendication 13 en combinaison avec la revendication 3, dans lequel l'unité de démultiplexage et la première unité de multiplexage sont combinées en une seule unité bidirectionnelle (82).
